# EUROPEAN PATENT SPECIFICATION

(11) **EP 3 834 116 B1**
(45) Date of publication and mention of the grant of the patent: **17.12.2025**
(21) Application number: 18929057.0
(22) Date of filing: 07.08.2018
(51) Int. Cl.: G06F 21/62, H04L 9/32, H04L 9/40, H04L 9/00, H04M 3/22

(54) **SYSTEM AND METHOD FOR ACCESSING A DATA REPOSITORY**
SYSTEM UND VERFAHREN ZUM ZUGRIFF AUF EINEN DATENSPEICHER
SYSTÈME ET PROCÉDÉ D'ACCÈS À UN RÉFÉRENTIEL DE DONNÉES

(43) Date of publication of application: 16.06.2021
(73) Proprietor: Cisco Technology, Inc., San Jose, California 95134-1706 (US)
(72) Inventor: ROBERTS, Christopher Shaun, Spring, Texas 77379 (US); KUNJAN, Solomon Ayyankulankara, Westford, Massachusetts 01886 (US); NATARAJAN, Muhilan, Allen, Texas 75013 (US); O'BRIEN, Michael P., Venice, Florida 34293 (US)
(74) Representative: Noble, Nicholas
(86) International application number: PCT/US2018/045682
(87) International publication number: WO 2020/032937

(56) References cited:
- WO-A1-2017/204943
- WO-A1-2018/045574
- CN-A- 108 023 894
- CN-B- 108 023 894
- US-A1- 2015 244 690
- US-A1- 2017 075 941
- US-A1- 2017 228 822
- US-A1- 2017 287 090
- US-A1- 2017 346 830
- "3rd Generation Partnership Project; Technical Specification Group Services and System Aspects; Security; Lawful Interception requirements (Release 15)", 27 September 2017 (2017-09-27), XP051361247, Retrieved from the Internet <URL:http://www.3gpp.org/ftp/tsg_sa/WG3_Security/TSGS3_LI/2017_66bis_Sophia/Docs/> [retrieved on 20170927]
- PATEL ET AL.: "Blockchain Exhumed", 2017 ISEA ASIA SECURITY AND PRIVACY (ISEASP), - 20170129 - IEEE, 29 January 2017 (2017-01-29), pages 1 - 12, XP033117503
- ORTIGOSA: "Secure Code Distribution based on BlockChain", DISTRIBUTION DE C'ODIGO SEGURO, vol. 1, 1 December 2016 (2016-12-01), XP055687135, Retrieved from the Internet <URL:URL:https://pdfs.semanticscholar.org/0038/62907f294e72d8c12bd0d0e965f9lda342f5.pdf> [retrieved on 20180925]

## Description

### TECHNICAL FIELD

The present technology pertains to accessing data repositories; and more specifically to a system using a distributed database for verifying access to data repositories by law enforcement agencies.

### BACKGROUND

As mobile networking advances, user plane control continues to move closer to radio towers and the like (e.g., NodeB, etc.), and further away from centrally located data centers and the like. The increasingly distributed nature of mobile networking can make validation and tracking an onerous and tedious task. Distributed network architectures also create potentially greater security risks. For example, call data access requests and interceptions must be validated at various points within a network and, furthermore, those network points may vary between requests and such. Where validation and granting of access requests is accomplished via manual inspection, it can take considerable time to interact with the various points within the network and recordation of the requests and granted access may be inconsistent or even nonexistent. As a result, managing authorized or lawful access to data sources over mobile networks can be challenging. Furthermore, it may be difficult to achieve a comprehensive record of which authorities or agencies have accessed, or attempted to access, a data repository.

WO2018/045574 is directed to an approach for controlling and tracing an object across a plurality of parties. A rule set may be enabled by the confirmation of a plurality of parties. The rule set may define constraints on operations related to the object. Upon receipt of a request for an operation related to the object, the requested operation may be verified based on the rule set agreed by the plurality of parties. In response to verifying that requested operation is valid, the requested operation may be performed, and a record for the operation may be created and stored in a blockchain database accessible to the plurality of parties.

CN108023894 is directed to a blockchain-based visa information system, and a blockchain-based visa information processing method. The system comprises an application interface, an identity authentication and authority management module, an access authorization and tracking module, an information storage module, a blockchain network module, and a database module.

3GPP draft; draft 33.126R15_TRACKED_CHANGES, 3rd Generation Partnership Project (3GPP), Mobile Competence Centre; 650, Route des Lucioles ; F-06921 Sophia-Antipolis Cedex ; France, XP051361247, is directed to "3rd Generation Partnership Project; Technical Specification Group Services and System Aspects; Security; Lawful Interception requirements (Release 15)."

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example network environment, according various embodiments of the subject technology;
FIG. 2 illustrates an example network environment, according to various embodiments of the subject technology;
FIG. 3 depicts an example method, according to various embodiments of the subject technology;
FIG. 4 depicts an example blockchain network, according to various embodiments of the subject technology;
FIG. 5 illustrates an example computing device, according to various embodiments of the subject technology; and
FIG. 6 illustrates an example computing device, according to various embodiments of the subject technology.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

A blockchain can be used to securely access and manage access to data sources in a scalable manner. The data sources can be repositories, logs, data streams, and the like and the blockchain, and an associated blockchain network, may authorize, validate, and record access requests, both successful and unsuccessful, to each respective data source.

Furthermore, in some embodiments, lawful authorization for accessing data can be maintained via the blockchain network. For example, a judge can authorize various law enforcement agencies to access call data (e.g., wiretap and the like) of a suspect. The judicial authorization may be used as a root block for a blockchain for tracking all access to the call data of the suspect under the judicial authorization. In some examples, the root block can include various parameters such as authorized agencies, authorized individuals, a time window for the authorization, and other content. Each access to the call data can be maintained as an entry on the blockchain and so may be reviewed at a later date with a decreased likelihood that the records have been altered due to the cryptographically interlinked nature of records on a blockchain.

In one embodiment, an administration service may manage access to a data repository or source. One or more blockchain service nodes can be part of a blockchain network and linked to the administration service for validating and storing copies of digital authorizations for law enforcement agencies (LEAs). Each digital authorization may be stored in a root block of a blockchain and the root block can be generated by a device controlled by a judge and able to provide a cryptographic key associated with the judge as well as an identification of the data repository or source and access parameters also within the root block.

In one embodiment, a master node can be a part of the blockchain network in order to define consensus requirements across the network for access to the data repository by a law enforcement agency and the like via an access device. The access device, controllable by the law enforcement agency, may transmit access requests with regards to the data repository to a blockchain service node which may verify, according to the consensus requirements defined by the master node, that the law enforcement agency is authorized to access the data repository. Furthermore, the blockchain service node may generate a data access record related to the access request and link the record to the root block via, for example, the blockchain (e.g., by appending the record as a block and the like).

### EXAMPLE EMBODIMENTS

Authorized access to data repositories, such as, for example and without imputing limitation, in the case of law enforcement retrieving call data for a cellphone belonging to a suspect, can be automated across mobile network environments, such as 5G mobile core and the like. In some embodiments, a blockchain can be used to secure and create an audit trail of government agencies and the like accessing call data associated with suspect cellphones.

Abuse of power in government agencies or service providers may be controlled and monitored through tracking and recording of data access over the blockchain. Recorded data access can be entered onto the blockchain and audited at a later time. Furthermore, the blockchain may provide an increased certainty that the record has not been tampered with.

The blockchain may include a root block having an official authorization and, in some embodiments, other parameters such as, for example and without imputing limitation, specific agency authorization, specific investigator authorization, duration, content, and the like. Accordingly, a law enforcement agency and the like seeking access to call data may have their respective authorization for access checked against the root block of the blockchain.

In order to generate the root block, a specialized software application may be executed by a device under control of a court system. For example, a judge may provide to the specialized software application a digital court order which may be authenticated based on a cryptographic signature such as a "pretty good privacy" (PGP) public key and private key pairing and the like. The root block can then be transmitted to a blockchain network made up of various service nodes controlled by law enforcement agencies, service providers, and the like. In some embodiments, the digital court order may be verified authenticated via two-factor authentication (2FA) and the like.

Furthermore, a variable consensus protocol can be enforced by a master node on the blockchain network. In other words, different blockchains, and thus different authorizations, can be validated according to different consensus protocols as defined by the master node. In one example, a warrant under the Foreign Intelligence Surveillance Act (or a "FISA warrant") may be validated only by certain service nodes within the blockchain network, whereas a standard warrant issued by a district court in a state jurisdiction may be validated by the network at large or by service nodes within the same geographical jurisdiction and the like.

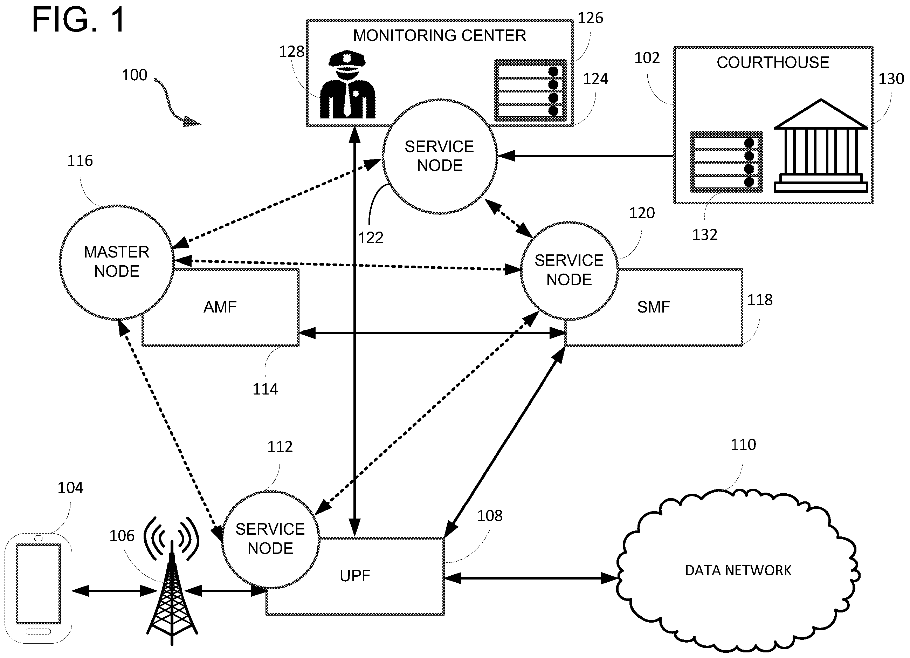

FIG. 1 depicts a network environment 100 over which a blockchain can provide recorded and authorized access to data sources such as call data. The call data may originate from a cellphone 104 in communication with a data network 110 over a radio network and the like provided by a cell tower 106. Data transmissions to and from cellphone 104 may be managed by a user plane function (UPF) 108.

In one embodiment, user plane function (UPF) 108 provides packet routing, network interconnection (e.g., such as to data network 110), policy enforcement such as Quality of Service (QoS) and the like, and other functions for managing user access and data across a network. User plane function (UPF) 108 may include various subsystems, applications, and subnetworks as will be apparent to a person having ordinary skill in the art.

A session management function (SMF) 118 may communicate with user plane function (UPF) 108 in order to manage communication sessions involving in cellphone 104. For example, a phone call, over voice over internet protocol (VOIP) or telephone network, may be managed by session management function (SMF) 118. In other examples, application-specific data streams, such as streaming video and the like, may be manage by session management function (SMF) 118. Nevertheless, session management function (SMF) 118 may also be in communication with an access and mobility management function (AMF) 114 in order to maintain sessions across locations or network portions. Access and mobility management function (AMF) 114 may manage, for example, maintaining a VOIP session for cellphone 104 as it travels between network coverage areas such as for a commuter participating in a phone call while on a moving train and the like.

In one embodiment, user plane function (UPF) 108 may also be in communication with a monitoring center 124. Monitoring center 124 may be a law enforcement agency installation and the like and can include a server 124 for monitoring phone calls of suspects and the like. An investigating officer 128 may use the server 124 in order to intercept data transmissions from cellphone 104. In one embodiment, monitoring center 124 may receive a copy of call data transmitted by cellphone 104 via user plane function (UPF) 108 via routing of copied data, log information, *post hoc* records, and the like as will be apparent to a person having ordinary skill in the art.

An authority, such as a courthouse 102, may provide permission and/or grant authority to monitoring center 126 or investigating officer 128 to intercept calls from cellphone 104. In some embodiments, courthouse 102 includes a court 130 and associated authorizing device 132. Authorizing device can be a computer terminal, server, executable application, and the like as will be apparent to a person having ordinary skill in the art.

Authorizing device 132 may transmit to a blockchain network a root block containing authorization, such as a cryptographic signature and the like, from a judge as well as warrant parameters for permitting law enforcement agencies to intercept data from cellphone 104. The blockchain network may include a number of nodes overlaid onto, for example, user plane function (UPF) 108, access and mobility management function (AMF) 114, session management function (SMF) 118, and monitoring center 124. While four nodes are depicted in FIG. 1, it will be understood by a person having ordinary skill in the art that any number of nodes may be included in the blockchain network. Further, in some examples, network functions or endpoints may include multiple nodes. For example, session management function (SMF) 118 may include service node 120 as well as, in some examples, multiple other service nodes.

Here, for explanatory purposes only, each network function and endpoint houses only a single node. Monitoring center 124 houses service node 122, session management function (SMF) 118 houses service node 120, user plane function (UPF) 108 houses service node 112, and access and mobility management function (AMF) 114 houses master node 116. In one example, the blockchain network is fully interconnected. That is to say, each node 112, 116, 120, 122 may communicate with each and every other node. In some other examples, nodes may communicate with a portion of other nodes in the blockchain network and through, for example, overlapping portions, all nodes in the blockchain network may indirectly intercommunicate.

In one embodiment, authorizing device 132 transmits the root block to service node 122 (housed by monitoring center 126). In some examples, the root block may be transmitted to service node 122 via an encrypted tunnel such as through Secure Shell (SSH) protocol and such. Service node 122 then transmits to master node 116 the received root block for dissemination to service nodes 112, 120, 122 of the blockchain network. In one embodiment, master node 116 transmits the root block to each service node 112, 120, 122 via respective encrypted tunnels. For example, service nodes 112, 120, and 122 may each maintain a cache of all root blocks received from master node 116 through an encrypted tunnel.

When investigating officer 128 attempts to intercept call data from cellphone 104, a root block associated with cellphone 104 may be checked at service node 122. Before user plane function (UPF) 108 provides access to investigating officer 128, service node 122 or 112 may validate the veracity and/or accuracy of the root block against copies stored in other nodes according to a consensus protocol stored by master node 116. Master node 116 may store multiple consensus protocols which may be utilized based on, for example, data stored a particular root block. In one embodiment, service nodes 122 or 112 may query master node 116 for an appropriate consensus protocol and then execute validation based on that. One such consensus protocol, provided for explanatory purposes and in no way limiting, may be to check a hash value for copies of the respective root block at each other node across the blockchain network. If all hashes are identical, service node 122 or 112 may regard the root block as valid and thus investigating office 128, if authorized by the contents of the root block, to be permitted to access call data from cellphone 104.

Furthermore, in one embodiment, a record of investigating officer 128 can be generated by service node 122 and then linked to the root block in order to generate or grow a blockchain providing a ledger of accesses and/or access attempts by investigating officer 128 and other law enforcement agencies. Further, the updated blockchain may be disseminated across the blockchain network in order to maintain consistency between nodes.

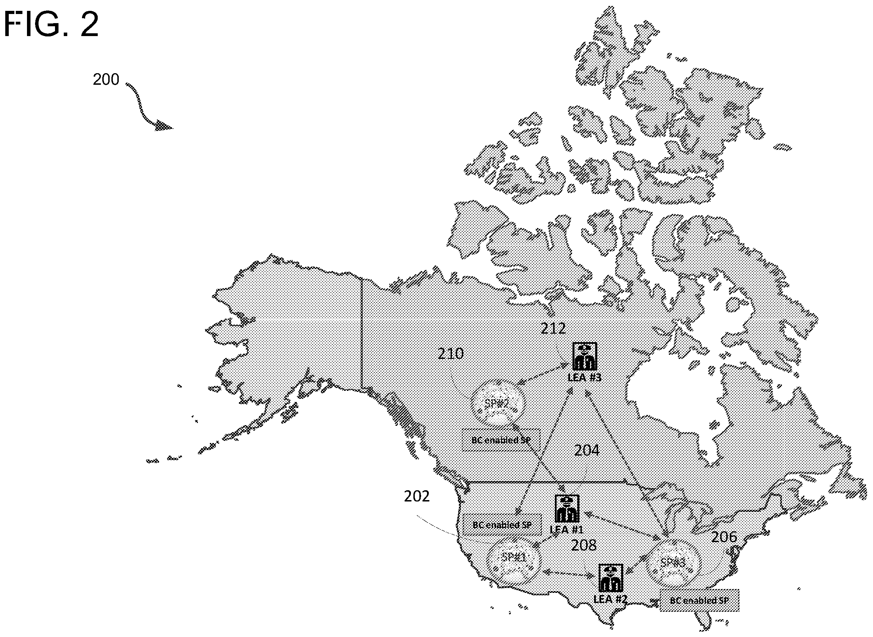

Nodes 112, 116, 120, and 122 may be located in different jurisdictions and thus the blockchain network may be international in nature. Likewise, courthouse 102 and/or monitoring center 124 may be in a different jurisdiction than each other and/or cellphone 104. FIG. 2 depicts one such embodiment of a multi-jurisdiction blockchain network 200 spanning the United States and Canada.

Each service provider 202, 206, and 210 may include a portion of network environment 100. For example, each service provider 202, 206, and 210 may include a respective user plane function (UPF) 108, session management function (SMF) 118, and/or access and mobility management function (AMF) 114, each with respective service nodes 112, 120, and/or master node 116. Further, law enforcement agencies 204, 208, and 212 may each be in jurisdictions of varying differences. For example, law enforcement agency 204 and law enforcement agency 208 may each be in different states within the United States and thus investigations across state borders may require varying types of authorization to retrieve call data through different parts of respective networks controlled by service providers 202 and 206.

Similarly, service provider 210 may be in an altogether different national jurisdiction from service providers 202 and 206 or law enforcement agencies 204 and 208. However, a user plane function (UPF) 108 of service provider 210 may use include a respective service node 112 and thus may automatically validate and verify, for example, a warrant complying with an international standard or jurisdiction in order to access call data of cellphone 104 while located in, for example, Canada.

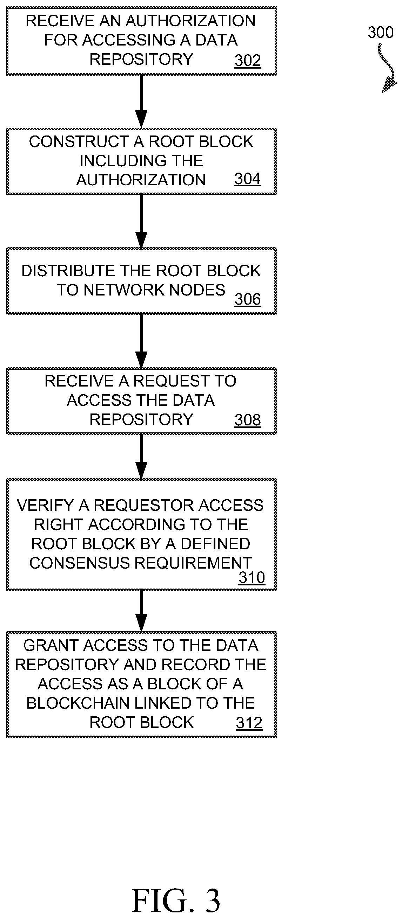

FIG. 3 depicts a method 300 by which, for example and without imputing limitation, an investigating agent 128 can gain authorized and documented access to a repository of data, such as call data for cellphone 104.

In one embodiment, an authorization for accessing a data repository may first be received by, for example, authorizing device 132 (operation 302). In some embodiments, the authorization includes a digital key provided by a judge controlling authorizing device 132. Furthermore, in various examples and embodiments, other access parameters such as timeframes, identification of particular law enforcement agencies, and the like may be included along with an identification of the data repository. The identification of the data repository can be a device identifier, phone number identifier, or other identifier as will be apparent to a person having ordinary skill in the art.

In some embodiments, authorizing device 132 and the like may construct a root block consisting of the received information such as, for example, the authorization (operation 304). The root block may be in various forms suitable for transmission and processing such as, for example and without imputing limitation, a JavaScript Object Notation (JSON) object, serialized data object structure, a tuple, a dict or other key-value structure, or various other data structures as will be apparent to a person having ordinary skill in the art.

The root block may then be distributed to nodes on a blockchain network (operation 306). In some embodiments, one service node (e.g., service node 122) may receive the root block from authorizing device 132. The service node (e.g., service node 122) can then redistribute the received root block to a master node (e.g., master node 116), which then disseminates the root block to each service node in the blockchain network through, for example and without imputing limitation, encrypted tunnels. In some embodiments, each or multiple service nodes may receive the root block directly from authorizing device 132. Nevertheless, each node in the blockchain network may eventually store a copy of the root block (and associated blockchain, as discussed below).

A service node (e.g., service node 122) may receive a request, from an accessing device such as server 124 and the like, to access the data repository (operation 308). In some embodiments, the accessing device may be associated with a service node on the blockchain network. In some embodiments, the service node receiving the request may be associated with a routing and flow control portion of a service provider network (e.g., user plane function (UPF) 108) and so can receive the request via a user plane function (UPF) and the like rather than directly from the accessing device.

In any case, the service node may verify that the accessing device has access rights, or authorization, to the data repository by examining the earlier received root block and applying a consensus protocol (operation 310). The consensus protocol may be determined by a master node within the blockchain network and can define a network consensus requirement for accessing the data repository associated with the root block. For example, the master node may select, based on preconfigured rules or according to a determination based on processing the root block and/or network, a subset of service nodes within the blockchain network to validate the root block and/or blockchain of the root block. The master node can send a command to validate, via encrypted tunnel, to each service node of the selected subset of service nodes. In one embodiment, the command may contain identification of other service nodes for validation (e.g., a list of service node IP addresses) and each service node of the subset of service nodes may communicate with each other service node of the subset of service nodes through an encrypted IP tunnel and the like.

In further response to the master node command, the service nodes may transmit back whether the validation was successful. Depending on the consensus protocol, the master node may verify the access right or not. For example, the master node may verify the access right only if all selected service nodes respond with a successful validation. In another example, a consensus protocol for a particular root block may include a 75% consensus requirement for validating access rights. That is to say, 75% or more of other verifying nodes each have identical copies of the root block in order to successfully verify access requests routed through it. In some embodiments, consensus protocols may vary based on characteristics of the root block and/or an associated blockchain.

In some embodiments, if an access right cannot be verified (e.g., due to being unable to validate a respective blockchain, etc.), then the accessing device may be barred from further access to the network pending investigation and an encrypted alert can be transmitted to the master node. The authorizing device (e.g., an issuing court, etc.), relevant service providers, and accessing device (e.g., law enforcement agency, etc.) may also be alerted. Furthermore, in some embodiments, the service nodes which are unable to verify the access right may be reported through an alert or the like in order to further investigation. In some embodiments, the entire network may shut down to further access requests once a single failure has been detect or may shut down or otherwise limit requests at some threshold number of failures reported.

In some embodiments, having verified the access right, access to the data repository may be granted to the requesting device and the access can be recorded and linked to the root block as a block in a blockchain depending from the root block (operation 312). Further, in some embodiments, copies of the root block throughout the blockchain network may then be updated to reflect the updated blockchain. In other words, where a root block had, for example, no access requests associated with it before a first access request, it may now be updated across the network by storing in the caches of each service node a new block linked back to the root block (e.g., by including a hash reference and such). Likewise, where there had been a previous access request, a longer blockchain reflecting the new access request may now update be stored in the caches of each service node across the network by storing a new block linked back to a most recent block depending from the root block. In some embodiments, updates to the blockchain may be disseminated by the master node directly to each service node via, for example, respective encrypted IP tunnels. In some embodiments, updates may disseminate across the network via communications between services nodes. In this manner, a growing historical record of accesses under the authorization contained in the original root block may be maintained throughout the network.

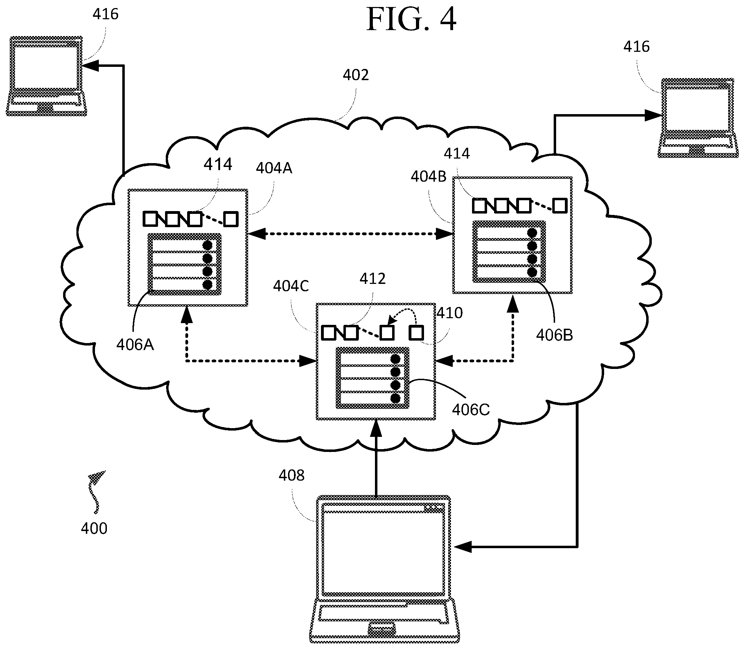

While FIG. 4 depicts one specific blockchain network environment 400 of the present disclosure, it is by no means the only blockchain network architecture on which the concepts herein can be implemented. For example, an architecture wherein each access terminal is associated with a network node, etc., can be used. Further, other types of access terminals such as mobile devices, smartphones, and the like could also be used with blockchain network environment 400.

Nodes 404A-C within a blockchain network 402 may intercommunicate and store copies of blockchain and similar data objects in memory. Each node 404A-C can store respective complete copies of each blockchain on the blockchain network 402. Further, while FIG. 4 depicts each node 404A-C as a dedicated server 406A-C, in some examples nodes 404A-C may instead or also be an executable software application on a server and/or personal computer, a virtual machine, and the like.

Terminals 408 and 416 interact with blockchain network 402 via, for example, a secured network (e.g., VPN, etc.). Terminal 408 may update one of the stored blockchains by transmitting an event transmission, record object, or other signal to node 404C within blockchain network 402. Node 404C may then process the received transmission in order to generate a new block 410 which can be added onto a respective blockchain 412. In some examples, there may be processes for randomizing which node assumes authority to update the blockchain such as, for example, a mining algorithm and the like (e.g., solving an easily verifiable but difficult to solve cryptographic puzzle such as determining appended characters which will cause a hash value to have a particular quality). In other examples, certain or all nodes may be granted authority to update blockchains by the system and any updates produced are taken presumed authentic and authoritative.

Node 404C may transmit an updated blockchain 414 to each other node 404A-B in blockchain network 402. Updated blockchain 414 may include previous blockchain 412 with a new block 410 appended. In this manner, updated blockchain 414 may reflect a sequential expansion of the associated blockchain and may replace previous copies (e.g., copies not including new block 410) stored on the node.

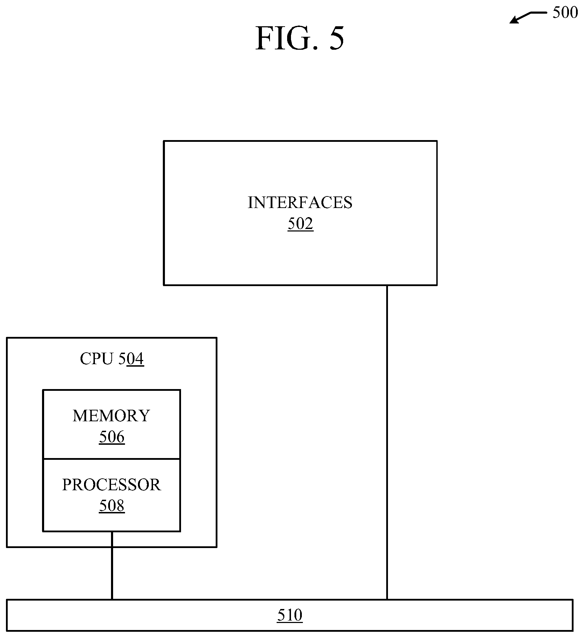

Although the system shown in FIG. 5 is one specific network device of the present disclosure, it is by no means the only network device architecture on which the concepts herein can be implemented. For example, an architecture having a single processor that handles communications as well as routing computations, etc., can be used. Further, other types of interfaces and media could also be used with the network device 500.

Regardless of the network device's configuration, it may employ one or more memories or memory modules (including memory 506) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 506 could also hold various software containers and virtualized execution environments and data.

The network device 500 can also include an application-specific integrated circuit (ASIC), which can be configured to perform routing, switching, and/or other operations. The ASIC can communicate with other components in the network device 500 via the connection 510, to exchange data and signals and coordinate various types of operations by the network device 500, such as routing, switching, and/or data storage operations, for example.

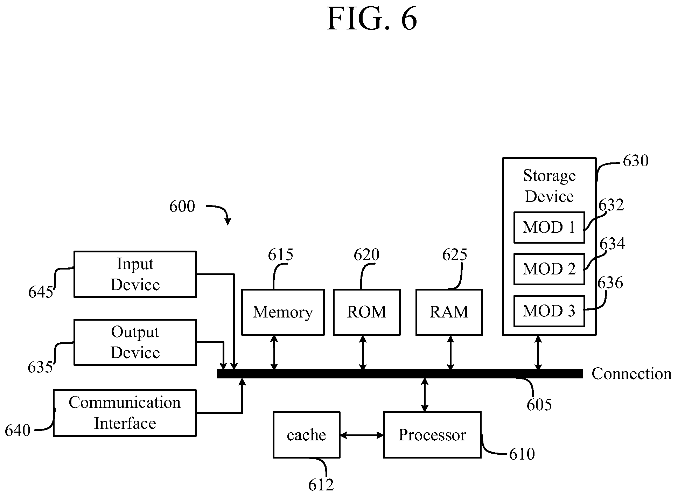

FIG. 6 illustrates a computing system architecture 600 including components in electrical communication with each other using a connection 605, such as a bus. System 600 includes a processing unit (CPU or processor) 610 and a system connection 605 that couples various system components including the system memory 615, such as read only memory (ROM) 620 and random access memory (RAM) 625, to the processor 610. The system 600 can include a cache of high-speed memory connected directly with, in close proximity to, or integrated as part of the processor 610. The system 600 can copy data from the memory 615 and/or the storage device 630 to the cache 612 for quick access by the processor 610. In this way, the cache can provide a performance boost that avoids processor 610 delays while waiting for data. These and other modules can control or be configured to control the processor 610 to perform various actions. Other system memory 615 may be available for use as well. The memory 615 can include multiple different types of memory with different performance characteristics. The processor 610 can include any general purpose processor and a hardware or software service, such as service 1 632, service 2 634, and service 3 636 stored in storage device 630, configured to control the processor 610 as well as a specialpurpose processor where software instructions are incorporated into the actual processor design. The processor 610 may be a completely self-contained computing system, containing multiple cores or processors, a bus, memory controller, cache, etc. A multi-core processor may be symmetric or asymmetric.

To enable user interaction with the computing device 600, an input device 645 can represent any number of input mechanisms, such as a microphone for speech, a touchsensitive screen for gesture or graphical input, keyboard, mouse, motion input, speech and so forth. An output device 635 can also be one or more of a number of output mechanisms known to those of skill in the art. In some instances, multimodal systems can enable a user to provide multiple types of input to communicate with the computing device 600. The communications interface 640 can generally govern and manage the user input and system output. There is no restriction on operating on any particular hardware arrangement and therefore the basic features here may easily be substituted for improved hardware or firmware arrangements as they are developed.

Storage device 630 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 625, read only memory (ROM) 620, and hybrids thereof.

The storage device 630 can include services 632, 634, 636 for controlling the processor 610. Other hardware or software modules are contemplated. The storage device 630 can be connected to the system connection 605. In one aspect, a hardware module that performs a particular function can include the software component stored in a computer-readable medium in connection with the necessary hardware components, such as the processor 610, connection 605, output device 635, and so forth, to carry out the function.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

## Claims

1. A system for managing access to a data repository, the system comprising:
at least one administration service to manage access to a data repository;
a plurality of blockchain service nodes, each blockchain service node configured to validate and store a copy of a digital authorization for accessing data stored in the data repository, the plurality of blockchain service nodes linked to the at least one administration service;
an authorizing device configured to transmit a root block for a blockchain to at least one of the plurality of blockchain service nodes, the root block comprising the digital authorization for accessing data stored in the data repository and an identification of the data repository;
a master node configured to determine a consensus protocol for the plurality of blockchain service nodes, the consensus protocol defining a network consensus requirement for access to the data repository pursuant to the digital authorization stored at the plurality of blockchain service nodes; and
an accessing device configured to transmit a request to a first blockchain service node of the plurality of blockchain service nodes, the request to access the data repository, and the first blockchain service node configured to:
verify, according to the consensus protocol, an access right to the data repository, the access right associated with the accessing device and the digital authorization;
generate a record of access to the data repository by the accessing device, the record of access including a reference to the root block either directly or indirectly through at least one other record including a reference to the root block; and
store the record of access.

2. The system of claim 1, wherein the consensus protocol includes comparing the respective copies of the digital authorization to each other.

3. The system of claim 1 or 2, wherein the authorizing device is controlled by a judge and the root block further comprises a cryptographic key associated with the judge.

4. The system of claim 1, 2, or 3, wherein the root block further comprises access parameters to the data repository, optionally wherein the access parameters include one of an access duration, an identification of content to be accessed, or identification of an authorized accessor.

5. The system of any preceding claim, wherein the accessing device is controlled by a law enforcement agency and the digital authorization provides the access right of the law enforcement agency to the data repository.

6. The system of any preceding claim, wherein the administration service comprises one of a user plane function, UPF, session management function, SMF, or access and mobility management function, AMF.

7. A method for managing access to a data repository, the method comprising:
receiving, at a blockchain service node of a plurality of blockchain service nodes and from an authorizing device over a network, a root block for a blockchain, the root block comprising a digital authorization for accessing data stored in a data repository and an identification of the data repository;
receiving, at a master node and from the blockchain service node, the root block, the master node storing a consensus protocol defining a network consensus requirement for access to the data repository pursuant to the digital authorization stored at the blockchain service node;
transmitting, from the master node and to the plurality of blockchain service nodes, the root block;
receiving, at the master node and from an accessing device, a request to access the data repository;
verifying, by a portion of the plurality of blockchain service nodes and according to the consensus protocol, an access right to the data repository, the access right associated with the accessing device and digital authorization;
generating, by the master node, a record of access to the data repository by the accessing device, the record of access including a reference to the root block either directly or indirectly through at least one other record including a reference to the root block; and
storing, by the master node, the record of access.

8. The method of claim 7, wherein the consensus protocol comprises identification of a portion of the plurality of blockchain nodes for verifying an access right to the data repository and the method further comprising:
determining by the master node and for the portion of the plurality of blockchain service nodes, the consensus protocol.

9. The method of claim 7 or 8, wherein the master node indirectly receives from the accessing device the request to access the data repository through one of the blockchain service node or a second blockchain service node of the plurality of blockchain service nodes.

10. The method of claim 7, 8, or 9, further comprising storing, by each blockchain service node of the plurality of blockchain service nodes, a copy of the record of access.

11. The method of any of claims 7 to 10, wherein the authorizing device is controlled by a judge and the root block further comprises a cryptographic key associated with the judge.

12. The method of any of claims 7 to 11, wherein the root block further comprises access parameters to the data repository, optionally wherein the access parameters include one of an access duration, an identification of content to be accessed, or an identification of an authorized accessor.

13. The method of any of claims 7 to 12, wherein at least one of:
A) the accessing device is controlled by a law enforcement agency and the digital authorization provides the access right of the law enforcement agency to the data repository;
B) the network comprises an administration service, the administration service comprising one of a user plane function UPF, a session management function, SMF, or an access and mobility management function, AMF.

14. At least one non-transitory computer readable medium comprising instructions stored thereon, the instructions effective to cause one or more network connected devices to perform the method of any of claims 7 to 13.

## Patentansprüche

1. System zur Verwaltung des Zugriffs auf ein Datenspeicher-Repository, wobei das System Folgendes aufweist:
zumindest einen Administrationsdienst zur Verwaltung des Zugriffs auf ein Datenspeicher-Repository;
eine Mehrzahl von Blockchain-Dienstknoten, wobei jeder Blockchain-Dienstknoten dazu konfiguriert ist, eine digitale Autorisierung zum Zugriff auf im Datenspeicher-Repository gespeicherte Daten zu validieren und eine Kopie davon zu speichern, wobei die Mehrzahl von Blockchain-Dienstknoten mit dem zumindest einen Administrationsdienst verbunden ist;
eine Autorisierungsvorrichtung, die dazu konfiguriert ist, einen Wurzelblock für eine Blockchain an zumindest einen der Mehrzahl von Blockchain-Dienstknoten zu übertragen, wobei der Wurzelblock die digitale Autorisierung zum Zugriff auf im Datenspeicher-Repository gespeicherte Daten sowie eine Identifikation des Datenspeicher-Repositories aufweist;
einen Masterknoten, der dazu konfiguriert ist, ein Konsensprotokoll für die Mehrzahl von Blockchain-Dienstknoten zu bestimmen, wobei das Konsensprotokoll eine Netzwerkkonsensanforderung für den Zugriff auf das Datenspeicher-Repository gemäß der bei der Mehrzahl von Blockchain-Dienstknoten gespeicherten digitalen Autorisierung definiert; und
eine Zugriffsvorrichtung, die dazu konfiguriert ist, eine Anfrage an einen ersten Blockchain-Dienstknoten der Mehrzahl von Blockchain-Dienstknoten zu übertragen, wobei die Anfrage den Zugriff auf das Datenspeicher-Repository betrifft, und wobei der erste Blockchain-Dienstknoten dazu konfiguriert ist:
die Zugriffsberechtigung auf das Datenspeicher-Repository gemäß dem Konsensprotokoll zu verifizieren, wobei die Zugriffsberechtigung mit der Zugriffsvorrichtung und der digitalen Autorisierung verknüpft ist;
einen Zugriffsdatensatz zum Zugriff auf das Datenspeicher-Repository durch die Zugriffsvorrichtung zu erzeugen, wobei der Zugriffsdatensatz einen Verweis auf den Wurzelblock entweder direkt oder indirekt über zumindest einen weiteren Datensatz mit einem Verweis auf den Wurzelblock aufweist; und
den Zugriffsdatensatz zu speichern.

2. System nach Anspruch 1, wobei das Konsensprotokoll den Vergleich der jeweiligen Kopien der digitalen Autorisierung miteinander umfasst.

3. System nach Anspruch 1 oder 2, wobei die Autorisierungsvorrichtung von einem Richter gesteuert wird und der Wurzelblock ferner einen mit dem Richter verknüpften kryptographischen Schlüssel aufweist.

4. System nach Anspruch 1, 2 oder 3, wobei der Wurzelblock ferner Zugriffsparameter für das Datenspeicher-Repository aufweist, wobei die Zugriffsparameter wahlweise eine Zugriffsdauer, eine Identifikation von zuzugreifenden Inhalten oder eine Identifikation eines autorisierten Zugriffsausführenden umfassen.

5. System nach einem der vorhergehenden Ansprüche, wobei die Zugriffsvorrichtung von einer Strafverfolgungsbehörde gesteuert wird und die digitale Autorisierung das Zugriffsrecht der Strafverfolgungsbehörde auf das Datenspeicher-Repository bereitstellt.

6. System nach einem der vorhergehenden Ansprüche, wobei der Administrationsdienst eine Benutzer-Ebenen-Funktion, UPF, eine Sitzungsverwaltungsfunktion, SMF, oder eine Zugriffs- und Mobilitätsverwaltungsfunktion , AMF, aufweist.

7. Verfahren zur Verwaltung des Zugriffs auf ein Datenspeicher-Repository, wobei das Verfahren Folgendes aufweist:
Empfangen eines Wurzelblocks für eine Blockchain bei einem Blockchain-Dienstknoten einer Mehrzahl von Blockchain-Dienstknoten von einer Autorisierungsvorrichtung über ein Netzwerk, wobei der Wurzelblock eine digitale Autorisierung zum Zugriff auf im Datenspeicher-Repository gespeicherte Daten sowie eine Identifikation des Datenspeicher-Repositories aufweist;
Empfangen des Wurzelblocks bei einem Masterknoten von dem Blockchain-Dienstknoten, wobei der Masterknoten ein Konsensprotokoll speichert, das eine Netzwerkkonsensanforderung für den Zugriff auf das Datenspeicher-Repository gemäß der beim Blockchain-Dienstknoten gespeicherten digitalen Autorisierung definiert;
Übertragen des Wurzelblocks vom Masterknoten an die Mehrzahl von Blockchain-Dienstknoten;
Empfangen einer Anfrage zum Zugriff auf das Datenspeicher-Repository bei dem Masterknoten von einer Zugriffsvorrichtung;
Verifizieren einer Zugriffsberechtigung auf das Datenspeicher-Repository durch einen Teil der Mehrzahl von Blockchain-Dienstknoten gemäß dem Konsensprotokoll, wobei die Zugriffsberechtigung mit der Zugriffsvorrichtung und der digitalen Autorisierung verknüpft ist;
Erzeugen eines Zugriffsdatensatzes zum Zugriff auf das Datenspeicher-Repository durch die Zugriffsvorrichtung durch den Masterknoten, wobei der Zugriffsdatensatz einen Verweis auf den Wurzelblock entweder direkt oder indirekt über zumindest einen weiteren Datensatz mit einem Verweis auf den Wurzelblock aufweist; und
Speichern des Zugriffsdatensatzes durch den Masterknoten.

8. Verfahren nach Anspruch 7, wobei das Konsensprotokoll die Identifikation eines Teils der Mehrzahl von Blockchain-Knoten zur Verifizierung einer Zugriffsberechtigung auf das Datenspeicher-Repository umfasst, und wobei das Verfahren ferner Folgendes aufweist:
Bestimmen des Konsensprotokolls durch den Masterknoten für den Teil der Mehrzahl von Blockchain-Dienstknoten.

9. Verfahren nach Anspruch 7 oder 8, wobei der Masterknoten die Anfrage zum Zugriff auf das Datenspeicher-Repository indirekt von der Zugriffsvorrichtung über einen der Blockchain-Dienstknoten oder einen zweiten Blockchain-Dienstknoten der Mehrzahl von Blockchain-Dienstknoten empfängt.

10. Verfahren nach Anspruch 7, 8 oder 9, ferner umfassend das Speichern einer Kopie des Zugriffsdatensatzes durch jeden Blockchain-Dienstknoten der Mehrzahl von Blockchain-Dienstknoten.

11. Verfahren nach einem der Ansprüche 7 bis 10, wobei die Autorisierungsvorrichtung von einem Richter gesteuert wird und der Wurzelblock ferner einen mit dem Richter verknüpften kryptographischen Schlüssel aufweist.

12. Verfahren nach einem der Ansprüche 7 bis 11, wobei der Wurzelblock ferner Zugriffsparameter für das Datenspeicher-Repository aufweist, wobei die Zugriffsparameter wahlweise eine Zugriffsdauer, eine Identifikation von zuzugreifenden Inhalten oder eine Identifikation eines autorisierten Zugriffsausführenden umfassen.

13. Verfahren nach einem der Ansprüche 7 bis 12, wobei zumindest eines von Folgendem zutrifft:
A) die Zugriffsvorrichtung wird von einer Strafverfolgungsbehörde gesteuert, und die digitale Autorisierung stellt das Zugriffsrecht der Strafverfolgungsbehörde auf das Datenspeicher-Repository bereit;
B) das Netzwerk weist einen Administrationsdienst auf, wobei der Administrationsdienst eine Benutzer-Ebenen-Funktion, UPF, eine Sitzungsverwaltungsfunktion, SMF, oder eine Zugriffs- und Mobilitätsverwaltungsfunktion, AMF, aufweist.

14. Mindestens ein nichtflüchtiges, computerlesbares Medium mit darauf gespeicherten Anweisungen, wobei die Anweisungen bewirken, dass ein oder mehrere netzwerkverbundene Vorrichtungen das Verfahren gemäß einem der Ansprüche 7 bis 13 ausführen.

## Revendications

1. Système pour gérer l'accès à un référentiel de données, ledit système comprenant :
au moins un service d'administration pour gérer l'accès à un référentiel de données ;
une pluralité de nœuds de services d'une chaîne de blocs, chaque nœud de services de la chaîne de blocs étant configuré pour valider et stocker une copie d'une autorisation numérique pour accéder à des données stockées dans le référentiel de données, la pluralité de nœuds de services de la chaîne de blocs étant liée à l'au moins un service d'administration ;
un service d'autorisation configuré pour transmettre un bloc racine pour une chaîne de blocs, à au moins un de ceux parmi la pluralité de nœuds de services de la chaîne de blocs, le bloc racine comprenant l'autorisation numérique pour accéder à des données stockées dans le référentiel de données et comprenant une identification du référentiel de données ;
un nœud maître configuré pour déterminer un protocole de consensus pour la pluralité de nœuds de services de la chaîne de blocs, le protocole de consensus définissant une exigence de consensus du réseau pour l'accès au référentiel de données conformément à l'autorisation numérique stockée au niveau de la pluralité de nœuds de services de la chaîne de blocs ; et
un dispositif d'accès configuré pour transmettre une demande à un premier nœud de services de la chaîne de blocs parmi la pluralité de nœuds de services de la chaîne de blocs, pour transmettre la demande d'accès au référentiel de données, et le premier nœud de services de la chaîne de blocs est configuré pour :
vérifier, selon le protocole de consensus, un droit d'accès au référentiel de données, le droit d'accès étant associé au dispositif d'accès et à l'autorisation numérique ;
générer un enregistrement d'accès au référentiel de données par le dispositif d'accès, l'enregistrement d'accès comprenant une référence au bloc racine soit directement soit indirectement, en passant par au moins un autre enregistrement comprenant une référence au bloc racine ; et
stocker l'enregistrement d'accès.

2. Système selon la revendication 1, dans lequel le protocole de consensus comprend le fait de comparer entre elles les copies respectives de l'autorisation numérique.

3. Système selon la revendication 1 ou 2, dans lequel le dispositif d'autorisation est contrôlé par un juge, et le bloc racine comprend en outre une clé cryptographique associée au juge.

4. Système selon la revendication 1, 2 ou 3, dans lequel le bloc racine comprend en outre des paramètres d'accès au référentiel de données, éventuellement système dans lequel les paramètres d'accès comprennent un des éléments suivants parmi une durée d'accès, une identification du contenu auquel accéder ou une identification d'un accesseur autorisé.

5. Système selon l'une quelconque des revendications précédentes, dans lequel le dispositif d'accès est contrôlé par un organisme chargé de l'application de la loi, et l'autorisation numérique fournit, au référentiel de données, le droit d'accès de l'organisme chargé de l'application de la loi.

6. Système selon l'une quelconque des revendications précédentes, dans lequel le service d'administration comprend une des fonctions suivantes parmi une fonction de plan utilisateur, UPF, une fonction de gestion de session, SMF, ou une fonction de gestion d'accès et de mobilité, AMF.

7. Procédé de gestion d'accès à un référentiel de données, le procédé comprenant le fait :
de recevoir, au niveau d'un nœud de services d'une chaîne de blocs parmi une pluralité de nœuds de services de la chaîne de blocs et en provenance d'un dispositif d'autorisation via un réseau, un bloc racine pour une chaîne de blocs, le bloc racine comprenant une autorisation numérique pour accéder à des données stockées dans un référentiel de données et comprenant une identification du référentiel de données ;
de recevoir le bloc racine au niveau d'un nœud maître et en provenance du nœud de services de la chaîne de blocs, le nœud maître stockant un protocole de consensus définissant une exigence de consensus du réseau pour l'accès au référentiel de données conformément à l'autorisation numérique stockée au niveau du nœud de services de la chaîne de blocs ;
de transmettre le bloc racine à partir du nœud maître et jusqu'à la pluralité de nœuds de services de la chaîne de blocs ;
de recevoir, au niveau du nœud maître et en provenance d'un dispositif d'accès, une demande pour accéder au référentiel de données ;
de vérifier, par une partie de la pluralité de nœuds de services de la chaîne de blocs et selon le protocole de consensus, un droit d'accès au référentiel de données, le droit d'accès étant associé au dispositif d'accès et à l'autorisation numérique ;
de générer, par le nœud maître, un enregistrement d'accès au référentiel de données par le dispositif d'accès, l'enregistrement d'accès comprenant une référence au bloc racine soit directement soit indirectement, en passant par au moins un autre enregistrement comprenant une référence au bloc racine ; et
de stocker, par le nœud maître, l'enregistrement d'accès.

8. Procédé selon la revendication 7, dans lequel le protocole de processus comprend l'identification d'une partie de la pluralité de nœuds de la chaîne de blocs afin de vérifier un droit d'accès au référentiel de données, et le procédé comprend en outre :
la détermination du protocole de consensus par le nœud maître et pour la partie de la pluralité de nœuds de services de la chaîne de blocs.

9. Procédé selon la revendication 7 ou 8, dans lequel le nœud maître reçoit indirectement, en provenance du dispositif d'accès, la demande d'accès au référentiel de données en passant par l'un ou l'autre du nœud de services de la chaîne de blocs ou d'un deuxième nœud de services de la chaîne de blocs parmi la pluralité de nœuds de services de la chaîne de blocs.

10. Procédé selon la revendication 7, 8 ou 9, comprenant en outre le stockage, par chaque nœud de services de la chaîne de blocs, d'une copie de l'enregistrement d'accès.

11. Procédé selon l'une quelconque des revendications 7 à 10, dans lequel le dispositif d'autorisation est contrôlé par un juge, et le bloc racine comprend en outre une clé cryptographique associée au juge.

12. Procédé selon l'une quelconque des revendications 7 à 11, dans lequel le bloc racine comprend en outre des paramètres d'accès au référentiel de données, éventuellement procédé dans lequel les paramètres d'accès comprennent un des éléments suivants parmi une durée d'accès, une identification du contenu auquel accéder ou une identification d'un accesseur autorisé.

13. Procédé selon l'une quelconque des revendications 7 à 12, dans lequel au moins un des éléments suivants fait :
A) que le dispositif d'accès est contrôlé par un organisme chargé de l'application de la loi, et l'autorisation numérique fournit, au référentiel de données, le droit d'accès de l'organisme chargé de l'application de la loi ;
B) que le réseau comprend un service d'administration, le service d'administration comprenant une des fonctions suivantes parmi une fonction de plan utilisateur, UPF, une fonction de gestion de session, SMF, ou une fonction de gestion d'accès et de mobilité, AMF.

14. Au moins un support non transitoire, lisible par ordinateur, ledit support comprenant des instructions qui y sont stockées, lesdites instructions étant efficaces pour amener un ou plusieurs dispositifs connectés au réseau à mettre en œuvre le procédé selon l'une quelconque des revendications 7 à 13.
